# FASCICULE DE BREVET EUROPEEN

(11) **EP 0 478 398 B1**
(45) Date de publication et mention de la délivrance du brevet: **06.07.1994**
(21) Numéro de dépôt: 91402136.5
(22) Date de dépôt: 30.07.1991
(51) Int. Cl.: B60T 13/74, G05G 15/06, F16D 65/34

(54) **Commande électromécanique à structure centrifuge**
Elektromechanische Steuerung mit Hilfe einer Zentrifuge
Electromechanical control device with a centrifugal structure

(30) Priorité: 28.09.1990 FR 9012014
(43) Date de publication de la demande: 01.04.1992
(73) Titulaire: ALLIEDSIGNAL EUROPE SERVICES TECHNIQUES, 93700 Drancy (FR)
(72) Inventeur: Magnaval, Jean-Louis, Bendix Europe Services Tech., F-93700 Drancy (FR); Maligne, Jean-Charles, Bendix Europe Services Tech, F-93700 Drancy (FR)
(74) Mandataire: Bentz, Jean-Paul

(56) Documents cités:
- EP-A- 0 267 099
- CH-A- 339 440
- FR-A- 1 009 925
- US-A- 2 069 680

## Description

La présente invention concerne une commande électromécanique à structure centrifuge destinée, notamment, à équiper un frein de type à coin pour véhicule automobile.

Le document US-A-4 809 823 décrit un dispositif de freinage équipé d'une telle commande, et comprenant un arbre entraîné en rotation par un moteur électrique, au moins deux masselottes susceptibles de se déplacer sous l'effet d'une force centrifuge entre un disque et un plateau, et un dispositif à coin transformant une translation selon un premier axe en une translation selon un second axe.

La présente invention a pour but d'améliorer une telle commande. En effet, on sait qu'en début de freinage, il est nécessaire de déplacer rapidement les organes de friction pour les mettre en contact avec le disque à freiner et que pour cette étape, il n'est demandé qu'un faible effort, tandis qu'ensuite, le déplacement est faible mais l'effort demandé est important.

En outre, il est souvent requis que le mécanisme de frein soit équipé d'une commande manuelle pour le parcage du véhicule ainsi équipé.

La commande électromécanique selon l'invention répond à ces critères grâce aux caractéristiques qui font l'objet de la première revendication.

Selon l'invention, l'arbre de la commande électromécanique à structure centrifuge est monté mobile en translation axiale pour entraîner en translation le dispositif à coin, le plateau est fixé axialement tandis que le disque, qui est solidaire d'un manchon axial formant, avec l'extrémité de l'arbre, un ensemble vis-écrou verrouillable, est susceptible d'une translation axiale et peut être entraîné en rotation par l'arbre.

La position des masselottes détermine l'écartement entre le disque et le plateau.

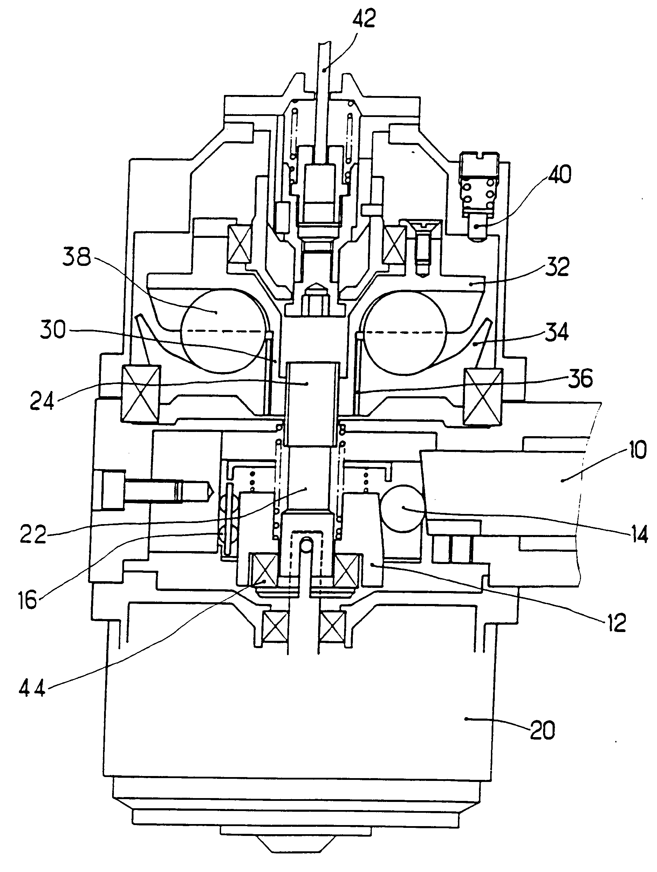

L'invention sera mieux comprise et d'autres buts, avantages et caractéristiques de celle-ci apparaîtront clairement à la lecture de la description qui suit d'un mode de réalisation préféré donné à titre d'exemple non limitatif et à laquelle une planche de dessin est jointe sur laquelle :
- La Figure Unique représente schématiquement en coupe un dispositif d'actionnement d'un frein à coin incorporant la commande électromécanique à structure centrifuge selon l'invention.

En référence maintenant à cette figure unique, l'homme du métier reconnaîtra en 10 le piston d'actionnement du frein dont la translation est provoquée par celle du dispositif à coin 12, un rouleau 14 et un moyen de guidage 16 favorisant la translation de ces composants de façon connue en soi.

Un moteur électrique 20 entraîne en rotation un arbre 22 qui définit un axe et qui est monté mobile en translation axiale pour pouvoir entraîner en translation le dispositif de coin 12. L'extrémité 24 de l'arbre 22 est filetée de manière à former une vis coopérant avec un manchon axial 30 vissé sur l'extrémité 24 de l'arbre 22.

Ce manchon 30 est solidaire d'un disque 32. Un plateau 34, fixe en translation axiale, est entraîné en rotation avec le manchon 30 et le disque 32 grâce, par exemple, à des cannelures 36 pratiquées à la périphérie du manchon 30 et sur la paroi intérieure du plateau 34.

Deux masselottes 38, en forme de billes dans l'exemple représenté, constituent la structure centrifuge. Elles sont susceptibles de se déplacer entre le plateau 34 et le disque 32 sous l'effet d'une force centrifuge. Du fait de la forme des parois en regard du plateau 34 et du disque 32, la position radiale des billes détermine l'écartement entre le plateau 34 et le disque 32.

Un frotteur 40 achève l'ensemble et permet de freiner la rotation du disque 32 lorsque ce dernier vient à son contact.

Le fonctionnement est le suivant. Au repos, le dispositif se trouve dans l'état représenté. Lors de l'application d'une puissance électrique au moteur 20, l'arbre 22 entre en rotation. Du fait du filetage pratiqué sur l'extrémité 24 de l'arbre, le manchon 30 et l'arbre forment un ensemble vis-écrou, l'arbre 22 se vissant dans le manchon 30. En effet, l'inertie du disque 32, du plateau 34 et des billes 38 freine le manchon 30 par rapport à l'arbre 22. Ce dernier se déplace alors axialement entraînant rapidement le dispositif à coin 12 en translation par l'intermédiaire de la butée à billes 44. Par réaction, le piston 10 est également entraîné en translation, ce qui assure la mise en contact des garnitures de friction et du disque dans l'application de la commande décrite à un frein à disque à coin.

Quand l'arbre 22 ne peut plus se visser dans le manchon 30, par la retenue du dispositif à coin 12 alors en appui sur le rouleau 14, il entraine ce manchon en rotation. L'ensemble constitué du manchon 30, du disque 32, du plateau 34 et des billes 38 entre donc en rotation avec l'arbre 22.

Sous l'effet de la force centrifuge, les billes 38 tendent à s'éloigner de l'axe et, par suite, à écarter le disque 32 du plateau 34 qui est fixe en translation axiale. En se déplaçant, le disque 32 emmène bien sûr le manchon 30 et, par suite, l'arbre 22 qui lui est, à ce moment-là solidaire. Ce dernier entraîne le dispositif à coin 12, mais le mouvement axial est limité du fait de la réaction du piston 10, un effort important étant ainsi transmis aux garnitures de friction.

Pour relâcher l'effort, il suffit de ralentir la rotation de l'arbre 22 en coupant, par exemple, l'alimentation électrique du moteur 20.

Du fait de l'inertie précitée, le manchon 30 se dévisse alors de l'extrémité 24 de l'arbre 22. Ce dernier revient alors dans la position représentée, ramenant en même temps le dispositif à coin 12 et en relâchant donc l'effort exercé sur le piston 10.

Le mouvement de translation du disque 32 n'est plus alors limité par la réaction exercée par le piston 10 et, sous l'effet de la force centrifuge, les billes 38, qui coopèrent avec la rampe ménagée sur le plateau 34, écartant encore le disque 32 au contact du frotteur 40. Le frottement ainsi obtenu freine fortement alors l'ensemble disque 32, plateau 34 et billes 38. Le rotor du moteur électrique 20 présentant une certaine inertie tourne encore, entraînant ainsi le re-vissage du manchon 30 sur l'extrémité 24 de l'arbre 22. La force exercée par le piston 10 bloque en translation le dispositif à coin 12, et le manchon revient alors dans la position représentée où l'ensemble de l'équipage s'immobilise.

On constate que l'on peut aisément moduler l'effort de freinage par asservissement de la vitesse du moteur électrique 20.

Pour compléter la commande électromécanique par une commande manuelle, il suffit alors de rajouter une tirette 42 susceptible d'entraîner manuellement en translation l'arbre 22 et, par suite, le dispositif à coin 12.

On a donc bien ainsi une commande répondant aux objectifs précités et qui est simple et fiable.

L'Homme du métier pourra y apporter de nombreuses modifications sans sortir du cadre de l'invention tel que défini par les revendications jointes.

## Revendications

1. Commande électromécanique à structure centrifuge comprenant un arbre (22) entraîné en rotation par un moteur électrique (20) et déterminant un axe, au moins deux masselottes (38) susceptibles de se déplacer sous l'effet d'une force centrifuge entre un plateau (34) et un disque (32), le dit plateau (34) pouvant être entraîné en rotation par le dit arbre, et un dispositif à coin (12), caractérisé en ce que le dit arbre (22) est monté mobile en translation axiale pour entraîner en translation le dit dispositif à coin (12), et que le dit plateau (34) est fixé axialement tandis que le dit disque (32), qui est solidaire d'un manchon axial (30) formant, avec l'extrémité (24) du dit arbre (22), un ensemble vis-écrou verrouillable, est susceptible d'une translation axiale et peut être entraîné en rotation par le dit arbre (22), la position radiale des dites masselottes (38) déterminant l'écartement entre le dit disque (32) et le dit plateau (34).

2. Commande électromécanique à structure centrifuge selon la revendication 1 caractérisé en ce que le dit disque (32) est susceptible d'entrer en contact avec un frotteur fixe (40) de manière à être freiné.

3. Commande électromécanique à structure centrifuge selon la revendication 1 ou 2 caractérisé en ce que le dit disque (32) est axialement solidaire d'une tirette manuelle (42) fixe en rotation.

4. Frein à coin caractérisé en ce qu'il comprend une commande électromécanique à structure centrifuge selon l'une quelconque des revendications précédentes, le dit dispositif à coin (12) entraînant selon un deuxième axe un piston d'actionnement (10) du dit frein.

## Patentansprüche

1. Elektromechanische Steuerung mit einem Zentrifugalaufbau, mit einer Welle (22), die von einem Elektromotor (20) in Drehung versetzt wird und eine Achse bestimmt, wenigstens zwei Fliehgewichten (38), die in der Lage sind, sich unter der Wirkung einer Zentrifugalkraft zwischen einer Platte (34) und einer Scheibe (32) zu verstellen, wobei die Platte (34) von der Welle in Drehung versetzt werden kann, und mit einer Keilvorrichtung (12), dadurch gekennzeichnet, daß die Welle (22) axial verschiebbar angebracht ist, um die Keilvorrichtung (12) translatorisch zu bewegen, und daß die Platte (34) axial festgelegt ist, während die Scheibe (32), die fest mit einer axialen Muffe (30) verbunden ist, die mit dem Ende (24) der Welle (22) eine verriegelbare Schraube/Mutter-Baugruppe bildet, sich axial verschieben kann und von der Welle (22) in Drehungen versetzt werden kann, wobei die radiale Position der Fliehgewichte (38) den Abstand zwischen der Scheibe (32) und der Platte (34) bestimmt.

2. Elektromechanische Steuerung mit einem Zentrifugalaufbau nach Anspruch 1, dadurch gekennzeichnet, daß die Scheibe (32) in der Lage ist, mit einem feststehenden Reibelement (40) in Berührung zu treten, um gebremst zu werden.

3. Elektromechanische Steuerung mit einem Zentrifugalaufbau nach Anspruch 1 oder 2, dadurch gekennzeichnet, daß die Scheibe (32) axial fest mit einer drehfesten, manuellen Zugvorrichtung (42) verbunden ist.

4. Keilbremse, dadurch gekennzeichnet, daß sie eine elektromechanische Steuerung mit einem Zentrifugalaufbau nach einem der vorhergehenden Ansprüche enthält, wobei die Keilvorrichtung (12) einen Betätigungskolben (10) der Bremse entlang einer zweiten Achse antreibt.

## Claims

1. Electromechanical control having a centrifugal structure comprising a shaft (22) driven in rotation by an electric motor (20) and defining an axis, at least two flyweights (38) capable of moving under the effect of a centrifugal force between a plate (34) and a disk (32), said plate (34) being able to be driven in rotation by said shaft, and a wedge device (12), characterized in that said shaft (22) is mounted movably in axial translation to drive said wedge device (12) in translation, and that said plate (34) is axially fixed whereas said disk (32), which is solidly fixed to an axial sleeve (30) forming, with the end (24) of said shaft (22), a lockable screw-nut assembly, is capable of axial translation and can be driven in rotation by said shaft (22), the radial position of said flyweights (38) determining the separation of said disk (32) and said plate (34).

2. Electromechanical control having a centrifugal-structure according to Claim 1, characterized in that said disk (32) is able to come into contact with a fixed sliding contact (40) in such a manner as to be braked.

3. Electromechanical control having a centrifugal structure according to Claim 1 or 2, characterized in that said disk (32) is solidly fixed axially to a manual pull cable (42) fixed in rotation.

4. Wedge brake characterized in that it comprises an electromechanical control having a centrifugal structure according to any of the preceding claims, said wedge device (12) driving along a second axis an operating piston (10) of said brake.
